# FASCICULE DE BREVET EUROPEEN

(11) **EP 1 321 241 B1**
(45) Date de publication et mention de la délivrance du brevet: **13.06.2007**
(21) Numéro de dépôt: 02292941.8
(22) Date de dépôt: 28.11.2002
(51) Int. Cl.: B25C 1/08, F16L 29/02, F17C 13/04, F16K 1/30

(54) **Cartouche de gaz comprimé pour appareil de fixation et coiffe d'adaptation d'un joint intermédiaire.**
Druckgaspatrone für Befestigungsgerät und Adapter für Verbindungsmuffe
Pressure gas cartridge for fastening apparatus and adaptor for intermediate joint

(30) Priorité: 18.12.2001 FR 0116367
(43) Date de publication de la demande: 25.06.2003
(73) Titulaire: SOCIETE DE PROSPECTION ET D'INVENTIONS TECHNIQUES SPIT, 26501 Bourg-Les-Valence Cédex (FR)
(72) Inventeur: Vallon, Emmanuel, 26800 Portes Les Valence (FR); Nayrac, Frédéric, 26000 Valence (FR); Herelier, Patrick, 07300 Tournon (FR)
(74) Mandataire: Bloch, Gérard

(56) Documents cités:
- EP-A- 0 471 503
- EP-A- 0 922 902
- US-A- 4 971 224
- US-A- 6 138 714

## Description

L'invention concerne tout d'abord une cartouche de gaz comprimé destinée à alimenter en gaz un appareil de fixation à gaz comprimé, c'est-à-dire un appareil d'entrainement d'éléments de fixation du type clou, comportant un dispositif d'admission. Le dispositif d'admission de l'appareil est généralement une électrovanne.

Les dispositifs d'admission connus, comme par exemple celui décrit dans FR 2 771 796, comportent un embout d'admission mâle, à l'intérieur d'une cuvette formée par une jupe périphérique de protection. Cet embout d'admission est destiné à coopérer avec un clapet d'éjection de la cartouche pour écarter le clapet de son siège et permettre ainsi le transfert de gaz de la cartouche dans le dispositif d'admission de l'appareil. Lors de l'opération de transfert, il faut assurer l'étanchéité autour du clapet de la cartouche et de l'embout d'admission de l'appareil. A cet effet, souvent, et notamment dans le cas de la cartouche décrite dans FR 2 771 796, le clapet d'éjection de la cartouche se prolonge en un embout mâle qui coopère avec l'embout mâle d'admission de l'appareil à l'intérieur d'un raccord agencé de façon appropriée.

Une telle disposition présente toutefois l'inconvénient que l'embout de clapet d'éjection de la cartouche fait saillie hors du bord d'une coupelle de protection, avec le risque qu'il soit cassé au cours de sa manutention, sans parler des contraintes de stockage et d'étanchéité.

La présente invention vise à éliminer ces inconvénients.

A cet effet, elle concerne tout d'abord une cartouche de gaz comprimé destinée à alimenter en gaz un appareil de fixation à gaz comprimé, selon la revendication 1.

En toutes circonstances, le clapet d'éjection de la cartouche de l'invention ne fait donc plus saillie hors de la cuvette de protection et l'étanchéité est parfaite en position d'éjection.

Dans une première forme de réalisation de la cartouche, le clapet, en position de repos, fait saillie hors du joint d'étanchéité.

Dans ce cas, la surface d'appui du clapet est destinée à coopérer directement avec un embout mâle d'un dispositif d'admission de gaz de l'appareil pour repousser le clapet en position d'éjection dans laquelle le joint d'étanchéité s'étend de part et d'autre du plan de joint du clapet et de l'embout mâle du dispositif d'admission.

Avantageusement, le joint d'étanchéité comporte un manchon externe et un cordon interne dans un épaulement annulaire d'une portion élargie du manchon.

L'invention concerne également un ensemble d'une cartouche de gaz comprimé pour alimenter en gaz un appareil de fixation et une coiffe d'adaptation selon la revendication 10.

Ni la cartouche, ni l'ensemble de l'invention peuvent être obtenus en considérant les documents US 4971 224, considéré comme représentant l'art antérieur le plus proche, et GB 1 152 890. et GB 1 152 890.

L'invention sera mieux comprise à l'aide de la description de deux formes de réalisation de la cartouche, en référence au dessin annexé, sur lequel
- la figure 1 est une vue en coupe éclatée de la première forme de réalisation de la cartouche de gaz comprimé de l'invention et d'une électrovanne d'admission de gaz d'un appareil de fixation à gaz comprimé;
- la figure 2 est une vue en coupe de la cartouche et de l'électrovanne de la figure 1 avec le clapet d'éjection et l'embout d'admission en contact l'un avec l'autre;
- la figure 3 est une vue analogue à celle de la figure 2, mais à l'état de transfert de gaz de la cartouche dans l'appareil;
- la figure 4 est une vue d'ensemble de l'électrovanne de la figure 1 montée sur la cartouche ;
- la figure 5 est une vue en coupe éclatée de la deuxième forme de réalisation de la cartouche de gaz comprimé de l'invention, d'une électrovanne d'admission de gaz d'un appareil de fixation à gaz comprimé et de la coiffe d'adaptation avec son joint intermédiaire;
- la figure 6 est une vue en coupe de la cartouche et de l'électrovanne de la figure 5 avec le clapet d'éjection et le joint intermédiaire en contact l'un avec l'autre;
- la figure 7 une vue analogue à celle de la figure 6, mais à l'état de transfert de gaz de la cartouche dans l'appareil;
- la figure 8 est une vue d'ensemble de l'électrovanne de la figure 5 montée sur la cartouche ;

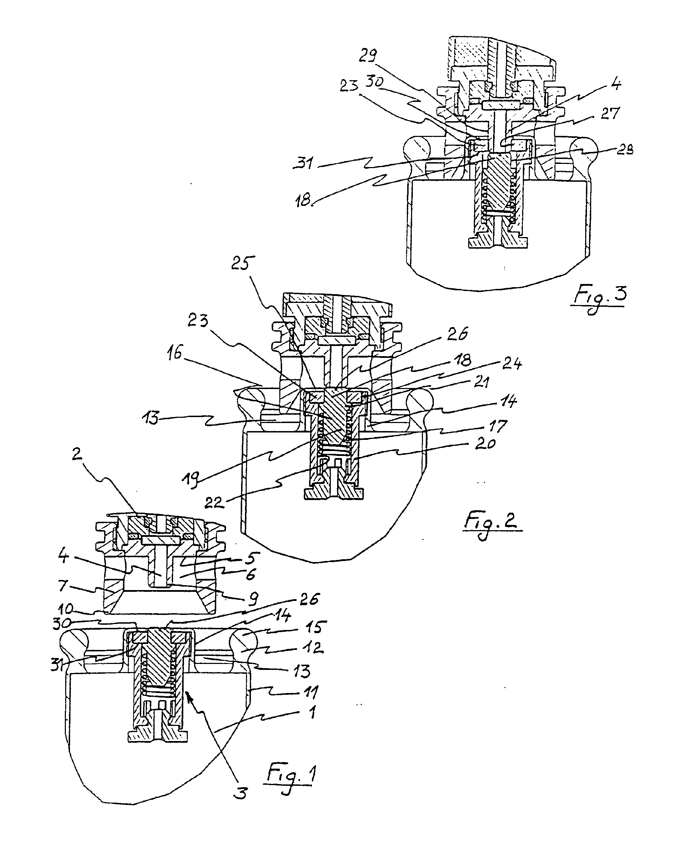

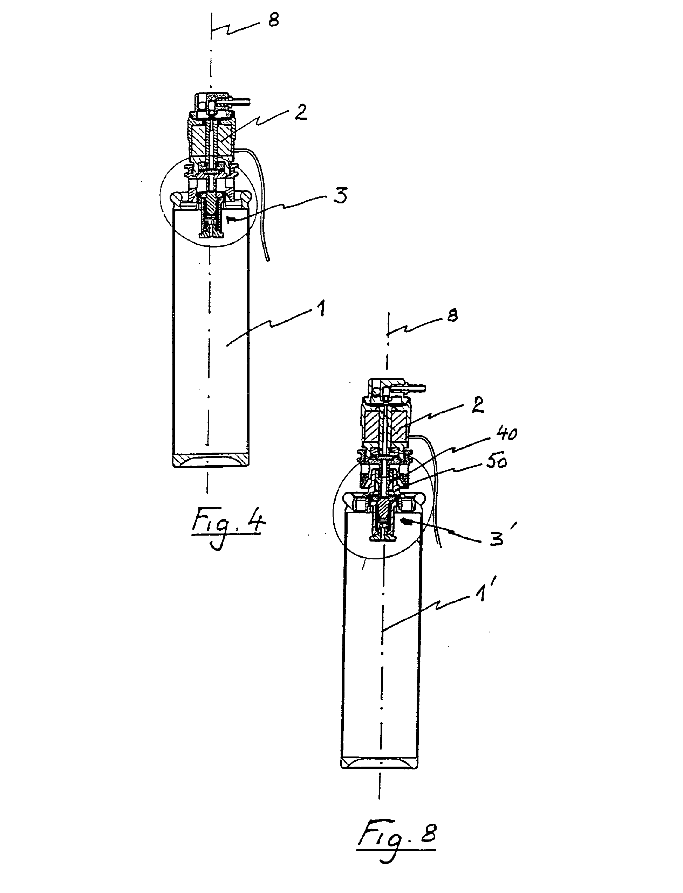

En référence à la figure 4, une cartouche de gaz comprimé 1 se monte sur l'électrovanne 2 d'admission de gaz comprimé d'un appareil d'entrainement d'éléments de fixation du genre clou, par l'intermédiaire d'un raccord d'étanchéité 3.

L'électrovanne d'admission 2 comporte un embout d'admission mâle 4 s'étendant axialement - le long de l'axe 8 - en saillie hors du fond 5 d'une cuvette 6, formée par une jupe annulaire 7 de réception d'un pied d'éjection 14 de la cartouche 1. L'extrémité 9 de l'embout d'admission 4 de l'électrovanne est en retrait par rapport au bord annulaire 10 de la jupe 7.

La cartouche de gaz comprimé 1 comporte une enveloppe cylindrique 11 se terminant par un épais bourrelet annulaire 12 formant cuvette 13 au centre de laquelle fait saillie le pied d'éjection 14. Le pied 14 ne fait pas saillie hors du plan du bord annulaire 15 du bourrelet 12. Dans l'exemple considéré, il l'affleure.

Un clapet d'éjection 16 est monté dans le pied d'éjection 14, coulissant dans un joint 20 en forme de manchon contre l'action d'un ressort de rappel 17. Le clapet 16 comporte, en saillie hors du joint 20, mais pas hors de la cuvette 13, une partie externe 18 prolongée par une partie interne 19 comportant un rebord annulaire d'étanchéité 21. Le ressort de rappel 17 est logé à l'intérieur du manchon de joint 20, autour de la partie interne de clapet 19, en appui contre le rebord annulaire d'étanchéité 21 de la partie de clapet 19, de diamètre sensiblement égal à celui de l'alésage central 22 du manchon 20 mais toutefois très légèrement inférieur, pour l'échappement du gaz comprimé entre la paroi de l'alésage 22 du manchon 20 et ce rebord 21. Au repos, le rebord 21 du clapet 16 est en appui contre un cordon annulaire d'étanchéité 23 logé dans un épaulement annulaire d'une portion élargie 24 du manchon d'étanchéité 20 du joint 3.

Le joint d'étanchéité 3 comporte donc un manchon 20 et un cordon 23 logés dans le pied 14 dont un bord annulaire 25 recouvre la portion élargie 24 du manchon et le cordon d'étanchéité 23. Le bord 25 du pied 14 affleure ici le plan du bord 15 du bourrelet 12. Le manchon d'étanchéité 20 est ainsi légèrement en retrait par rapport au plan du bord 15. La partie de clapet externe 18 présente, tournée vers l'extérieur, une surface 26 d'appui et de déplacement du clapet qui, en toutes circonstances, ne fait pas saillie hors du plan du bord 15. Ici, elle l'affleure. Par contre, dans la position de repos du clapet 16, sa partie externe 18, par sa portion adjacente à la surface d'appui 26, fait saillie hors du cordon d'étanchéité 23.

On notera que le diamètre de la partie de clapet externe 18 est sensiblement le même, très légèrement inférieur, que le diamètre de l'orifice de passage 27 du cordon d'étanchéité 23 et le même que le diamètre extérieur de l'embout d'admission 4.

En fonctionnement, la paroi latérale 28 de la partie de clapet externe 18 et la paroi latérale extérieure 29 de l'embout d'admission 4 sont successivement en contact avec la paroi de l'orifice de passage 27 du cordon d'étanchéité 23. Elles constituent des surfaces cylindriques d'étanchéité, d'axe 8.

Plus précisément, et toujours en fonctionnement, l'extrémité 9 de l'embout 4 vient en appui contre la face 26 de la partie de clapet externe 18, disposée perpendiculairement à l'axe 8. Grâce à des moyens conventionnels non représentés, la partie de clapet externe 18, en fonctionnement, est repoussée en position d'éjection par l'embout d'admission 4 contre l'action du ressort de rappel 17, pour dégager le rebord du clapet annulaire 21 du cordon de joint 23 et laisser le gaz s'échapper de la cartouche 1 dans l'électrovanne 2 de l'appareil de fixation. Dans cette position d'éjection de gaz, la surface d'appui et de déplacement 26 du clapet 18, 19 est en retrait par rapport à la surface 30 tournée vers l'extérieur du cordon de joint 23, et même par rapport à sa surface 31 tournée vers l'intérieur.

Dans la position d'éjection, le joint d'étanchéité 3, avec son manchon 20 et son cordon 23, s'étend de part et d'autre du plan de joint du clapet 18, 19 et de l'embout mâle d'admission 4, qui est le plan de la surface d'appui 26 de la partie de clapet externe 18.

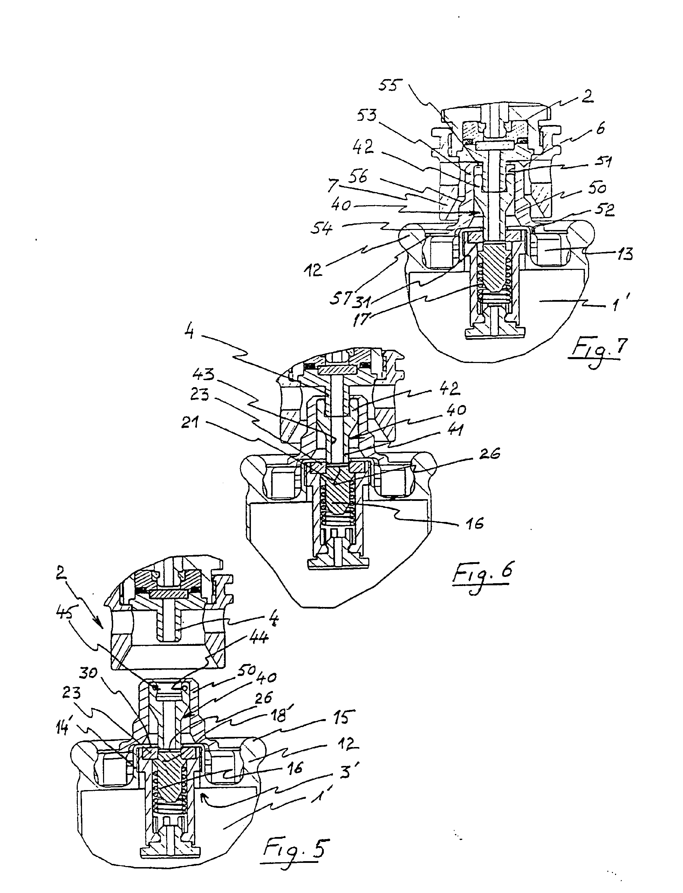

La deuxième forme de réalisation 1' de la cartouche, représentée sur les figures 5 à 8, se distingue ici de la première par deux caractéristiques seulement :
- le pied d'éjection 14' est franchement en retrait par rapport au plan du bord annulaire 15 du bourrelet 12;
- la partie de clapet externe 18', avec sa surface d'appui et de déplacement 26, en position de repos, est en retrait par rapport au plan de la surface 30 tournée vers l'extérieur du cordon d'étanchéité 23 du joint 3'.

Avec cette cartouche, on utilise un joint intermédiaire 40 monté dans une coiffe d'adaptation 50.

Le joint intermédiaire 40 est un manchon, avec une première portion d'extrémité mâle 41, montée en appui contre la surface d'appui 26 du clapet 16 pour l'actionner et écarter son rebord d'étanchéité 21 du cordon d'étanchéité 23, et une deuxième portion d'extrémité femelle 42, destinée à recevoir l'embout mâle d'admission 4 de l'électrovanné 2. Le diamètre extérieur de l'extrémité d'actionnement 41 correspond à celui de l'embout mâle d'admission 4. L'alésage 43 de passage du gaz comprimé, s'étendant dans le joint intermédiaire 40, est étagé et sa section, dans la portion d'extrémité 42, est notablement plus grande qu'à l'autre extrémité 41 pour être d'un diamètre égal au diamètre extérieur de l'embout d'admission 4. En conséquence, le diamètre extérieur de la portion d'extrémité 42 est aussi élargi par rapport à celui de la portion d'extrémité 41. Pour améliorer l'étanchéité entre le joint intermédiaire 40 et l'embout d'admission 4, la paroi de l'alésage élargi 44 dans la portion d'extrémité 42 présente une lèvre annulaire d'étanchéité 45.

La coiffe d'adaptation 50 a la forme d'une bague avec un alésage traversant étagé 51, 52, de section (51) d'un diamètre sensiblement égal au diamètre extérieur de la portion d'extrémité femelle élargie 42 du joint intermédiaire 40, dans une portion d'extrémité mâle 53 destinée à être reçue dans la cuvette 6 de l'électrovanne 2, et de section élargie (52) d'un diamètre sensiblement égal au diamètre extérieur du pied d'éjection 14', dans une deuxième portion d'extrémité femelle 54 destinée à recevoir ce pied d'éjection 14' de la cartouche 1'. L'alésage 51, 52 de la coiffe 50 s'étend sur une longueur sensiblement égale à celle du joint intermédiaire 40. A son extrémité de plus petite section 53, la coiffe 50 comporte un rebord annulaire 55 de retenue du joint intermédiaire 40. La paroi extérieure 56 de la coiffe 50 est également étagée, adaptée à l'alésage 51, 52 de réception du joint intermédiaire ainsi qu'à la jupe 7 de l'électrovanne 2 et elle se termine, à son extrémité élargie 54, par un bord annulaire 57 de diamètre extérieur égal au diamètre intérieur du bourrelet 12 de la cartouche 1' pour être reçu dans la cuvette 13 de la cartouche 1'.

Ce n'est donc qu'en position de fonctionnement que le joint intermédiaire 40 et la coiffe d'adaptation 50 font saillie hors de la cuvette 13 de la cartouche 1'.

En fonctionnement, pour repousser le clapet d'éjection 16 de la cartouche 1' de sa position de repos (figures 5, 6) à sa position d'éjection (figure 7), l'extrémité mâle 41 du joint intermédiaire 40 étant en appui contre la surface 26 du clapet 16 grâce à la coiffe d'adaptation 50, immobilisée dans la cuvette 13 de la cartouche 1', le joint intermédiaire 40, repoussé par l'embout d'admission 4, repousse la portion de clapet 18' contre l'action du ressort 17, pour dégager le rebord de clapet annulaire 21 du cordon de joint 23 et laisser le gaz s'échapper de la cartouche 1' dans l'électrovanne 2 de l'appareil de fixation. Alors, le joint intermédiaire est aussi dégagé du rebord 55 de la coiffe 50. Dans cette position d'éjection de gaz, la surface d'appui et de déplacement 26 du clapet 18', 16, est en retrait par rapport à la surface 31 du cordon 23, tournée vers l'intérieur.

## Revendications

1. Cartouche de gaz comprimé (1; 1') destinée à alimenter en gaz un appareil de fixation à gaz comprimé (2), comportant un bord de protection (12) formant cuvette (13) à l'intérieur de laquelle un clapet d'éjection (16) présentant une surface d'appui et de déplacement (26) est monté mobile en translation entre une position de repos et une position d'éjection de gaz, dans laquelle le gaz s'échappe autour du clapet, **caractérisée par le fait que** le clapet d'éjection (16), comprenant une partie interne (19) comportant un rebord annulaire d'étanchéité (21) et qui est prolongé par une partie externe (18, 18'), est monté, à l'intérieur d'un joint d'étanchéité (3; 3'), en retrait par rapport au bord (15) de la cuvette (13) et la surface d'appui (26) du clapet (16) ne fait pas saillie hors du bord (15) de la cuvette (13) en position de repos et est en retrait par rapport à la surface (30) tournée vers l'extérieur du joint d'étanchéité (3, 3', 23) en position d'éjection de gaz, le joint (3, 3') comprenant un cordon (23) dans lequel s'étend, en position de repos, la partie externe (18, 18') du clapet (16).

2. Cartouche selon la revendication 1, dans laquelle le clapet d'éjection (16, 18) est en retrait par rapport à la surface (31) tournée vers l'intérieur du joint d'étanchéité (3, 3', 23) en position d'éjection de gaz.

3. Cartouche selon l'une des revendications 1 et 2, dans laquelle le clapet d'éjection (16, 18), en position de repos, fait saillie hors du joint d'étanchéité (3, 23).

4. Cartouche selon la revendication 2, dans laquelle la surface d'appui (26) du clapet (16, 18) est destinée à coopérer directement avec un embout mâle (4) d'un dispositif d'admission de gaz (2) de l'appareil pour repousser le clapet (16) en position d'éjection dans laquelle le joint d'étanchéité (3, 20, 23) s'étend de part et d'autre du plan de joint (26) du clapet (16, 18) et de l'embout mâle (4) du dispositif d'admission (2).

5. Cartouche selon la revendication 1, dans laquelle la surface d'appui (26) du clapet (16, 18') en position de repos, est en retrait par rapport à la surface (30) tournée vers l'extérieur du joint d'étanchéité (3', 23) pour recevoir une première portion d'extrémité mâle (41) d'un joint intermédiaire (40) dont une deuxième portion d'extrémité femelle (42) est destinée à recevoir un embout mâle (4) d'un dispositif d'admission de gaz de l'appareil de fixation (2) pour repousser le clapet (16, 18') en position d'éjection.

6. Cartouche selon l'une des revendications 1 à 5, dans laquelle le joint d'étanchéité (3, 3') comporte un manchon externe (20) et un cordon interne (23) dans un épaulement annulaire d'une portion élargie (24) du manchon 20.

7. Cartouche selon la revendication 6, dans laquelle le manchon (20) et le cordon (23) du joint d'étanchéité (3; 3') s'étendent dans un pied d'éjection (14; 14') dont un bord annulaire (25) recouvre la portion élargie (24) du manchon (20) et le cordon d'étanchéité (23).

8. Cartouche selon la revendication 7, dans laquelle ledit bord annulaire (25) du pied (14) affleure le plan du bord (15) de la cuvette (13) de la cartouche (1).

9. Cartouche selon l'une des revendications 6 à 8, dans laquelle le clapet (16) comporte un rebord annulaire d'étanchéité (21) qui, au repos, est en appui contre le cordon annulaire d'étanchéité (23) et dont le diamètre est très légèrement inférieur au diamètre de l'alésage central (22) du manchon (20).

10. Ensemble d'une cartouche de gaz comprimé (1') destinée à alimenter en gaz un appareil de fixation à gaz comprimé (2) et comportant un bord de protection (12) formant cuvette (13) à l'intérieur de laquelle un clapet d'éjection (16), comprenant une partie interne (19) comportant un rebord annulaire d'étanchéité (21) et qui est prolongé par une partie externe (18') présentant une surface d'appui et de déplacement (26) et qui est montée à l'intérieur d'un joint d'étanchéité (23), est monté mobile en translation entre une position de repos et une position d'éjection de gaz, la surface d'appui (26), en position d'éjection de gaz et en position de repos, étant en retrait par rapport à la surface (30) tournée vers l'extérieur du joint d'étanchéité (23), et d'une coiffe d'adaptation (50) agencée pour être reçue dans la cuvette de protection de la cartouche (13) et en faire saillie et dans laquelle est montée un joint intermédiaire (40) comportant une première portion d'extrémité mâle (41), reçue dans le joint d'étanchéité (23) du fait du retrait de la surface d'appui (26), et une deuxième portion d'extrémité femelle (42) destinée à recevoir un embout mâle (4) d'un dispositif d'admission de gaz de l'appareil de fixation (2).

11. Ensemble selon la revendication 10, dans lequel la coiffe d'adaptation comporte un alésage traversant étagé (51, 52), une paroi extérieur étagée (56), avec, à ses deux extrémités, un rebord annulaire (55) de retenue du joint intermédiaire (40) et un bord annulaire (57) de réception dans la cuvette de protection (13) de la cartouche (1').

## Claims

1. Compressed-gas cartridge (1; 1') intended to supply gas to a compressed-gas fastening apparatus (2), comprising a protective edge (12) forming a bowl (13) inside which an ejection valve (16) exhibiting a bearing and travel surface (26) is mounted such that it can move in terms of translation between a rest position and a gas-ejection position, in which the gas escapes around the valve, the cartridge being **characterized in that** the ejection valve (16), which comprises an internal part (19) comprising an annular sealing rim (21) and which is extended by an external part (18, 18'), is mounted, inside a seal (3; 3'), set back from the edge (15) of the bowl (13) and the bearing surface (26) of the valve (16) does not project beyond the edge (15) of the bowl (13) in the rest position and is set back from the outwardly-facing surface (30) of the seal (3, 3', 23) in the gas-ejection position, the seal (3, 3') comprising a collar (23) into which, in the rest position, the external part (18, 18') of the valve (16) extends.

2. Cartridge according to Claim 1, in which the ejection valve (16, 18) is set back from the inwardly-facing surface (31) of the seal (3, 3', 23) in the gas-ejection position.

3. Cartridge according to one of Claims 1 and 2, in which the ejection valve (16, 18), in the rest position, projects beyond the seal (3, 23).

4. Cartridge according to Claim 2, in which the bearing surface (26) of the valve (16, 18) is intended to collaborate directly with a male end-piece (4) of a gas inlet device (2) of the apparatus in order to push the valve (16) back into an ejection position in which the seal (3, 20, 23) extends on both sides of the plane (26) along which the valve (16, 18) and the male end-piece (4) of the inlet device (2) meet.

5. Cartridge according to Claim 1, in which the bearing surface (26) of the valve (16, 18') in the rest position is set back from the outwardly-facing surface (30) of the seal (3', 23) to accept a first, male, end portion (41) of an intermediate seal (40) of which a second, female, end portion (42) is intended to accept a male end-piece (4) of a gas inlet device of the fastening apparatus (2) in order to push the valve (16, 18') back into the ejection position.

6. Cartridge according to one of Claims 1 to 5, in which the seal (3, 3') comprises an external sleeve (20) and an internal collar (23) in an annular shoulder of a widened portion (24) of the sleeve (20).

7. Cartridge according to Claim 6, in which the sleeve (20) and the collar (23) of the seal (3; 3') extend into an ejection footing (14; 14'), an annular edge (25) of which covers the widened portion (24) of the sleeve (20) and the sealing collar (23).

8. Cartridge according to Claim 7, in which the said annular edge (25) of the footing (14) lies flush with the plane of the edge (15) of the bowl (13) of the cartridge (1).

9. Cartridge according to one of Claims 6 to 8, in which the valve (16) comprises an annular sealing rim (21) which, at rest, bears against the annular sealing collar (23) and the diameter of which is very slightly smaller than the diameter of the central bore (22) of the sleeve (20).

10. Assembly of a compressed-gas cartridge (1') intended to supply gas to a compressed-gas fastening apparatus (2) and comprising a protective edge (12) forming a bowl (13) inside which an ejection valve (16), comprising an internal part (19) comprising an annular sealing rim (21) and which is extended by an external part (18') exhibiting a bearing and travel surface (26) and which is mounted inside a seal (23), is mounted such that it can move in terms of translation between a rest position and a gas-ejection position, the bearing surface (26), in the gas-ejection position and in the rest position, being set back from the outwardly-facing surface (30) of the seal (23), and of an adaptor cap (50) designed to be accepted in the cartridge's protective bowl (13) and to project therefrom and in which there is fitted an intermediate seal (40) comprising a first, male, end portion (41), accepted in the seal (23) because of the fact that the bearing surface (26) is set back, and a second, female, end portion (42) intended to accept a male end-piece (4) of a gas inlet device of the fastening apparatus (2).

11. Assembly according to Claim 10, in which the adaptor cap comprises a stepped through-bore (51, 52), a stepped exterior wall (56) with, at its two ends, an annular rim (55) for retaining the intermediate seal (40) and an annular edge (57) for housing in the protective bowl (13) of the cartridge (1').

## Patentansprüche

1. Druckgaspatrone (1; 1'), die dazu bestimmt ist, ein Druckgasbefestigungsgerät (2) zu versorgen, umfassend einen Schutzrand (12), der eine Wanne (13) bildet, in der eine Ausgabeklappe (16), die eine Stütz- und Verschiebefläche (26) aufweist, in Translation zwischen einer Ruheposition und einer Gasausgabeposition, in der das Gas um die Klappe austritt, beweglich montiert ist, **dadurch gekennzeichnet, dass** die Ausgabeklappe (16), umfassend einen inneren Teil (19), der einen ringförmigen Abdichtungsrand (21) aufweist und durch einen äußeren Teil (18, 18') verlängert ist, im Inneren einer Dichtung (3; 3') zum Rand (15) der Wanne (13) zurückgesetzt montiert ist, und die Stützfläche (26) der Klappe (16) nicht über den Rand (15) der Wanne (13) in Ruheposition hinausragt und zu der Fläche (30), die zum Äußeren der Dichtung (3, 3', 23) in Gasausgabeposition gerichtet ist, zurückgesetzt ist, wobei die Dichtung (3, 3') eine Schnur (23) umfasst, in der sich in Ruheposition der äußere Teil (18, 18') der Klappe (16) erstreckt.

2. Patrone nach Anspruch 1, bei der die Ausgabeklappe (16, 18) in Bezug auf die zum Inneren der Dichtung (3, 3', 23) in Gasausgabeposition gerichtete Fläche (31) zurückgesetzt ist.

3. Patrone nach einem der Ansprüche 1 und 2, bei der die Ausgabeklappe (16, 18) in Ruheposition über die Dichtung (3, 23) hinausragt.

4. Patrone nach Anspruch 2, bei der die Stützfläche (26) der Klappe (16, 18) dazu bestimmt ist, direkt mit einem männlichen Ansatz (4) einer Gaszuleitungsvorrichtung (2) des Geräts zusammenzuwirken, um die Klappe (16) in Ausgabeposition zurückzuschieben, in der sich die Dichtung (3, 20, 23) beiderseits der Dichtungsebene (26) der Klappe (16, 18) und des männlichen Ansatzes (4) der Zuleitungsvorrichtung (2) erstreckt.

5. Patrone nach Anspruch 1, bei der die Stützfläche (26) der Klappe (16, 18') in Ruheposition in Bezug auf die zum Äußeren der Dichtung (3', 23) gerichtete Fläche (30) zurückgesetzt ist, um einen ersten männlichen Endabschnitt (41) einer Zwischendichtung (40) aufzunehmen, deren zweiter weiblicher Endabschnitt (42) dazu bestimmt ist, einen männlichen Ansatz (4) einer Gaszuleitungsvorrichtung des Befestigungsgeräts (2) aufzunehmen, um die Klappe (16, 18') in Ausgabeposition zurückzuschieben.

6. Patrone nach einem der Ansprüche 1 bis 5, bei der die Dichtung (3, 3') eine äußere Hülse (20) und eine innere Schnur (23) in einem ringförmigen Absatz eines erweiterten Abschnitts (24) der Hülse (20) umfasst.

7. Patrone nach Anspruch 6, bei der sich die Hülse (20) und die Schnur (23) der Dichtung (3; 3') in einem Ausgabefuß (14; 14') erstrecken, dessen ringförmiger Rand (25) den erweiterten Abschnitt (24) der Hülse (20) und die Dichtschnur (23) abdeckt.

8. Patrone nach Anspruch 7, bei der der ringförmige Rand (25) des Fußes (14) an die Ebene des Randes (15) der Wanne (13) der Patrone (1) grenzt.

9. Patrone nach einem der Ansprüche 6 bis 8, bei der die Klappe (16) einen ringförmigen Dichtungsrand (21) umfasst, der in Ruhestellung an der ringförmigen Dichtschnur (23) anliegt, und dessen Durchmesser etwas geringer als der Durchmesser der Mittelbohrung (22) der Hülse (20) ist.

10. Gesamtheit einer Druckgaspatrone (1'), die dazu bestimmt ist, ein Druckgasbefestigungsgerät (2) zu versorgen, umfassend einen Schutzrand (12), der eine Wanne (13) bildet, in der eine Ausgabeklappe (16), die einen inneren Teil (19) beinhaltet, der einen ringförmigen Abdichtungsrand (21) aufweist und durch einen äußeren Teil (18') verlängert ist, der eine Stütz- und Verschiebefläche (26) aufweist und im Inneren einer Dichtung (23) montiert ist, in Translation zwischen einer Ruheposition und einer Gasausgabeposition beweglich montiert ist, wobei die Stützfläche (26) in Gasausgabeposition und in Ruheposition in Bezug auf die Fläche (30), die zum Äußeren der Dichtung (23) gerichtet ist, zurückgesetzt ist, wobei eine Anpassungskappe (50) derart angeordnet ist, dass sie in der Schutzwanne der Patrone (13) aufgenommen wird und über diese hinausragt, wobei in dieser eine Zwischendichtung (40) montiert ist, umfassend einen ersten männlichen Endabschnitt (41), der in der Dichtung (23) auf Grund der zurückgesetzten Anordnung der Stützfläche (26) aufgenommen wird, und einen zweiten weiblichen Endabschnitt (42), der dazu bestimmt ist, einen männlichen Ansatz (4) einer Gaszuleitungsvorrichtung des Befestigungsgeräts (2) aufzunehmen.

11. Gesamtheit nach Anspruch 10, bei der die Anpassungskappe eine abgestufte durchgehende Bohrung (51, 52), eine abgestufte Außenwand (56) mit an ihren beiden Enden einem ringförmigen Rand (55) zum Halten der Zwischendichtung (40) und einem ringförmigen Rand (57) für die Aufnahme der Patrone (1') in der Schutzwanne (13) umfasst.
